# EUROPÄISCHE PATENTSCHRIFT

(11) **EP 0 560 018 B1**
(45) Veröffentlichungstag und Bekanntmachung des Hinweises auf die Patenterteilung: **04.10.1995**
(21) Anmeldenummer: 93100633.2
(22) Anmeldetag: 18.01.1993
(51) Int. Cl.: B24D 3/28, C08G 59/68, C08G 65/12

(54) **Schleifmittel**
Abrasive article
Article abrasif

(30) Priorität: 07.03.1992 DE 4207258
(43) Veröffentlichungstag der Anmeldung: 15.09.1993
(73) Patentinhaber: Bakelite AG, 58642 Iserlohn-Letmathe (DE)
(72) Erfinder: Böttcher, Axel, Dr., W-4230 Wesel (DE); Foltes, Friedhelm, W-4100 Duisburg 11 (DE); Zehrfeld, Jürgen, Dr., W-4223 Voerde (DE)

(56) Entgegenhaltungen:
- EP-A- 0 257 757
- EP-A- 0 284 064
- EP-A- 0 344 911
- WO-A-91/13925
- HERMAN F. MARK, DONALD F. OTHMER, CHARLES G. OVERBERGER, GLENN T. SEABORG 'KIRK-OTHMER ENCYCLOPEDIA OF CHEMICAL TECHNOLOGY' 1980 , JOHN WILEY & SONS , NEW YORK AND TORONTO
- Römpp Chemie Lexicon, 9. Auflage, Seite 1196

## Beschreibung

Die Erfindung betrifft kunstharzgebundene Schleifmittel. Der Begriff Schleifmittel umfaßt dabei sowohl Schleifkörper, als auch Schleifscheiben verschiedenster Art sowie Schleifmittel auf Unterlage.

Allen diesen Schleifmitteln gemeinsam ist, daß abrasiv wirkende Schleifkörner mit Hilfe eines duroplastischen Bindemittels miteinander und ggf. mit einer Unterlage, bzw. einem Träger- oder Verstärkermaterial verbunden werden.

Aufgrund ihres günstigen Hochtemperatur- und Verschleißverhaltens sind Phenolharze die am häufigsten eingesetzten duroplastischen Bindemittel (vergl. Kunststoff-Handbuch Bd. 10 "Duroplaste", Hauser-Verlag, 2. Auflage 1988, S. 891 bis 921).

Für besonders hochwertige Schleifmittel mit einer flexiblen Bindung des Schleifkorns werden als Bindemittel Epoxidharze eingesetzt, die einerseits eine sehr gute Haftung zu den Gewebeunterlagen verschiedenster Art und andererseits eine gute Einbindefähigkeit für die verschiedenen Arten von Schleifkorn haben.

Der Effekt der guten Bindung des Schleifkorns wird gemäß EP-A 0 257 757, dadurch genutzt, daß ungesättigte, photohärtende Bindemittel mit Epoxidverbindungen modifiziert werden. Entsprechende Bindemittelmischungen, die für Schleifmittel auf Unterlage dienen, enthalten spezielle Komplexe als Photoinitiatoren und werden durch Strahlung gehärtet.

Ähnliche Komplexe in Kombination mit ethylenisch ungesättigten Verbindungen und/oder Epoxidverbindungen für die Herstellung von Schleifmitteln beschreiben EP-A 0 344 911 und EP-A 0 284 064. Die Bindemittel werden zuerst bestrahlt und dann thermisch nachgehärtet. Durch die vorangestellte Photohärtung wird eine Verkürzung der Härtungszeit erreicht.

Im Vergleich zu Phenolharzen zeigen aber Epoxidharze bislang eine geringere thermische Belastbarkeit. Es ist daher Aufgabe der Erfindung, Schleifmittel mit Bindemitteln auf Epoxidharz bereitzustellen, deren thermische Belastbarkeit verbessert ist, deren elastische Eigenschaften aber nicht verschlechtert sind. Darüberhinaus ist es ständiges Ziel der Entwicklung, die Adhäsion des Bindemittels zu Schleifkorn und Unterlage weiter zu verbessern.

Die Lösung der Aufgabe erfolgt durch Schleifmittel gemäß der Ansprüche 1 bis 8.

Es wurde gefunden, daß Schleifmittel mit einem Bindemittel auf Basis eines gängigen, handelsüblichen Epoxidharzes diese Anforderungen erfüllen, wenn die ungehärteten Bindemittel als Härterkomponente für eine thermische Härtung 0,01 bis 50 Gew.-%, bezogen auf die Epoxidverbindungen, einer Metallkomplexverbindung der allgemeinen Formeln

MLₓB_{y}, oder M [SR]ₓ B_{z}

enthalten, wobei
- M ein Metallion eines Metalls der 2. und 3. Hauptgruppe des Periodensystems sowie der Nebengruppenelemente,
- L chelatbildender Ligand oder eine aliphatische oder aromatische Carbonsäure,
- SR ein Säurerestion einer anorganischen Säure,
- B eine Imidazolverbindung,
- X eine natürliche Zahl im Bereich von 1 bis 8,
- Y eine natürliche Zahl im Bereich von 1 bis 5,
- Z eine natürliche Zahl im Bereich von 7 bis 8
sind.

Durch Einsatz dieser Härterkomponenten steigt die thermische Belastbarkeit von 90 bis 100 °C eines vergleichbaren mit Dicyandiamid gehärteten Epoxidharzbindemittels bis auf Werte von 180 bis 190 °C. Überraschenderweise aber wird dadurch die flexible Bindung des Schleifkorns nicht vermindert. Andererseits wird die Haftfestigkeit zur Unterlage und zum Schleifkorn wesentlich verbessert. Diese Effekte ermöglichen höhere Umdrehungszahlen entsprechender Schleifkörper oder - scheiben und bewirken gleichzeitig eine bessere Schleifqualität und eine längere Gebrauchsdauer der erfindungsgemäßen Schleifmittel.

Mit dem erfindungsgemäßen Bindemittel herstellbar sind alle gebräuchlichen Schleifmittel, insbesondere gepreßte, unverstärkte oder faserverstärkte Schleifkörper, gewebeverstärkte sowie verstärkte und hochverdichtete Schleifscheiben sowie Schleifmittel auf Unterlage.

Schleifmittel auf Unterlage sind flächenförmige Elemente, wie Blätter, Streifen oder Blattscheiben oder aus solchen Elementen zusammengesetzte Schleifwerkzeuge, wie Bänder, Fächerschleifscheiben oder Lamellenschleifräder.

Für Schleifmittel auf Unterlage können alle auf diesem Sektor üblichen flexiblen Unterlagen, wie Papier, Gewebe aus natürlichen oder synthetischen Fasern, Glasfasern, Vulkanfiber sowie Gewebe- bzw. Folien-Papier-Kombinationen der Vliese verwendet werden.

Als Epoxidharze können alle handelsüblichen Epoxidharze oder Gemische von Epoxidharzen mit monomeren epoxidgruppenhaltigen Verbindungen, sogenannten Reaktivverdünnern dienen. Insbesondere eingesetzt werden Umsetzungsprodukte von Bisphenolen mit Epichlorhydrin sowie epoxidierte Novolake.

Die Härterkomponente ist aus WO 91/13925 bekannt. Durch Vermischen der Epoxid- mit Härterkomponente entstehen Bindemittel, die bei Raumtemperatur nahezu unbegrenzt lager- und gebrauchsfähig sind und die erst oberhalb einer Anspringtemperatur aushärten. Dies bringt einen weiteren Vorteil des erfindungsgemäß eingesetzten Bindemittels, daß es als Einkomponentensystem eingesetzt werden kann. Den Bindemitteln können weitere übliche Zuschlagstoffe, Füllstoffe und/oder Additive zugegeben werden um eine Verstärkung, Streckung, Thixotropie oder andere gewünschte Eigenschafen einzustellen.

Durch Wahl der Metallionen, Liganden, Säurereste und Lewis-Basen kann, wie aus WO 91/13925 bekannt, die Härterkomponente hinsichtlich ihrer Anspringtemperatur und Härtungsgeschwindigkeit gezielt eingestellt werden. Somit sind Bindemittel, die auf eine niedrige Anspringtemperatur (oberhalb 60 °C aber unterhalb 100 °C) eingestellt sind, insbesondere zur Anwendung auf Papier geeignet oder anderen thermisch wenig belastbaren Unterlagen geeignet. Außerdem kann die Flexibilität des Bindemittels durch die Härterkonzentration eingestellt werden und es resultiert als weiterer Vorteil gegenüber dem Stand der Technik, daß auf elastifizierende Additive verzichtet werden kann.

Die Herstellung der erfindungsgemäßen Schleifmittel erfolgt in an sich bekannter Weise. Zur Herstellung unverstärkter und faserverstärkter Schleifkörper wird das Gemisch aus Schleifkörnern und ggf. Füll- und Zusatzstoffen, insbesondere üblichen Faser wie Glas-, Keramik- oder Aramidfasern mit dem Bindemittel vermischt, geformt und bei einer Temperatur oberhalb der Anspringtemperatur des Härters gehärtet.

So ist eine vorgeformte Mischung aus
80 Gew.-% Korund
8 Gew.-% Glasfaser
6 Gew.-% calciuiertem Ton und
6 Gew.-% Bindemittel,
bestehend aus 95 Gew.% Epoxidharz auf Basis Bisphenol A mit einem Epoxidäquivalent von 180,
5 Gew.-% Co(benzoylacetonato)₂ (methylimidazol)₂ bei 120 °C innerhalb von 10 Minuten durchgehärtet.

Es ist dabei von Vorteil, daß eine Nachhärtung nicht notwendig ist. Ein weiterer Vorteil ist, daß das Bindemittel unabhängig von der Herstellung des Schleifkörpers vorgemischt und ohne besondere Vorsichtsmaßnahme gelagert sein kann.

Bei Schleifscheiben wird in an sich bekannter Weise das Gewebe mit Phenolharz oder dem erfindungsgemäßen Bindemittel imprägniert und danach mit der entsprechenden Schleifscheibenmischung, die ebenfalls erfindungsgemäße Bindemittel enthält, verpreßt und anschließend gehärtet.

Zur Herstellung der Schleifscheiben auf Unterlage werden die bahnförmigen, flexiblen Unterlagen mit einem Bindemittel beschichtet. Das Bindemittel dieser Grundbindung wird angeliert und auf diese Grundschicht wird das gewünschte Schleifkorn aufgebracht.

Als Schleifkorn können alle üblichen natürlichen oder synthetischen Schleifkornarten inclusive Kornhohlkugeln eingesetzt werden.

Nach der sogenannten Vortrocknung wird durch erneuten Auftrag einer zweiten Bindemittelschicht, der Deckbindung, das Schleifkorn auf der Unterlage verankert. Danach erfolgt die endgültige Härtung aller Bindemittel und evtl. vorhandener Klebeschichten durch Zuführung von Energie in Form von thermischer Energie, Strahlung oder Mikrowellen.

Die Bindemittel für die Grund- und Deckbindung können gleich sein. Je nach Herstellungsverfahren kann es jedoch günstiger sein, für die Grundbindung ein Bindemittel mit einer längeren oder kürzeren Gel- und Härtungszeit oder einer niedrigen Anspringtemperatur als für die Deckbindung zu wählen. Beides läßt sich nahezu beliebig einstellen.

Es ist auch möglich, wahlweise die Grund- oder Deckbindung mit einem Bindemittel auf Phenolharzbasis auszubilden und für die jeweils andere Bindung das erfindungsgemäße Epoxidharz-Bindemittel einzusetzen. In jedem Fall wird ein guter Verbund zwischen beiden Bindungsschichten erreicht und gegenüber dem nur mit Phenolharz gebundenen Schleifmittel eine intensivere und flexiblere Bindung des Schleifkorns erzielt.

Eine besondere Ausführungsform der erfindungsgemäßen Schleifmittel auf Unterlage sind Fächerschleifscheiben oder Lamellenschleifräder, bei denen einzelne, mit Schleifkorn beschichtete Lamellen auf einen Fächer- oder Lamellenträger, ein Band, einen Zylinder oder eine Scheibe, geklebt sind. Durch Verwendung des gemäß der Erfindung eingesetzten Bindemittels als Kleber, mit dem die einzelnen Lamellen auf den Fächer- oder Lamellenträger geklebt sind, wird eine wesentliche Steigerung der Leistungsfähigkeit dieser Fächer- oder Lamellenschleifscheiben erzielt. Während z. B. mit herkömmlichen Bindemittel geklebte Lamellenschleifscheiben ihre Stabilitätsgrenze bei etwa 28 000 U/min erreichen, zeigen mit erfindungsgemäß eingesetzten Bindemittel (90,8 Gew.-% handelsübliches Epoxidharz auf Basis Bisphenol A mit einem Epoxidäquivalent von etwa 180, 5,8 Gew.-% CoSO₄ (Imidazol)₈, 3,4 Gew.-% hochdisperse Kieselsäure) geklebte Lamellenschleifräder selbst bei 32 000 U/min keine Ablösung.

## Patentansprüche

1. Schleifmittel auf Epoxidharz basis, **dadurch gekennzeichnet**, daß die ungehärteten Bindemittel als Härterkomponente für eine thermische Härtung 0,01 bis 50 Gew.-%, bezogen auf die Epoxidverbindungen, einer Metallkomplexverbindung der allgemeinen Formeln
MLₓB_{y}, oder M [SR]ₓB_{z}
enthalten, wobei
- M ein Metallion eines Metalls der 2. und 3. Hauptgruppe des Periodensystems sowie der Nebengruppenelemente,
- L ein chelatbildender Ligand oder eine aliphatische oder aromatische Carbonsäure,
- SR ein Säurerestion einer anorganischen Säure,
- B eine Imidazolverbindung,
- X eine natürliche Zahl im Bereich von 1 bis 8,
- Y eine natürliche Zahl im Bereich von 1 bis 5,
- Z eine natürliche Zahl im Bereich von 7 bis 8
sind.

2. Schleifmittel nach Anspruch 1, **dadurch gekennzeichnet**, daß es Schleifkörper sind.

3. Schleifmittel nach Anspruch 1, **dadurch gekennzeichnet**, daß es gewebeverstärkte Schleifscheiben sind.

4. Schleifmittel nach Anspruch 1, **dadurch gekennzeichnet**, daß es hochverdichtete Schleifscheiben sind.

5. Schleifmittel nach Anspruch 1, **dadurch gekennzeichnet**, daß es Schleifmittel auf Unterlage sind.

6. Schleifmittel auf Unterlage nach Anspruch 5, **dadurch gekennzeichnet**, daß Grund- und Deckbindung unterschiedliche Bindemittel oder Härterkomponenten haben.

7. Schleifmittel auf Unterlage nach Anspruch 5 und 6, **dadurch gekennzeichnet**, daß die Schleifmittel Fächerschleifscheiben oder Lamellenschleifräder sind.

8. Fächerschleifscheiben oder Lamellenschleifräder, **dadurch gekennzeichnet**, daß die einzelnen Lamellen mit einem Bindemittel gemäß Anspruch 1 auf den Fächer- oder Lamellenträger geklebt sind.

## Claims

1. Grinding agents based on epoxide resin, characterised in that the uncured bonding agents contain 0.001 to 50 % by weight, relative to the epoxide compounds, of a metal complex compound of the general formulae
MLₓ B_{y} or M(SR)ₓB_{z}
as hardening components, wherein
- M is a metal ion of a metal of the 2nd and 3rd main group or of the subgroups of the periodic system of the elements
- L is a chelate forming ligand or an aliphatic or aromatic carboxylic acid
- SR is an acid residue ion of an organic acid
- B is an imidazole compound
- x is a natural number in the region of 1 to 8,
- y is a natural number in the region of 1 to 5,
- z is a natural number in the region of 7 to 8.

2. Grinding agents according to claim 1, characterised in that they are grinding bodies.

3. Grinding agents according to claim 1, characterised in that they are fabric-reinforced grinding discs.

4. Grinding agents according to claim 1, characterised in that they are highly compressed grinding discs.

5. Grinding agents according to claim 1, characterised in that they are grinding agents on a backing.

6. Grinding agents on a backing according to claim 5, characterised in that the base bond and the cover bond have different agents or hardening components.

7. Grinding agents on a backing according to claims 5 and 6, characterised in that the grinding agents are fan-type grinding discs or lamellar grinding wheels.

8. Fan-type grinding discs or lamellar grinding wheels, characterised in that the individual lamellae are stuck to the fan or lamellae support with a bonding agent according to claim 1.

## Revendications

1. Produit abrasif avec un liant à base de résine époxyde, carctérisé en ce que ces liants contiennent, en tant que composants durcisseurs, 0,001 jusqu'à 50 % en poids rapportés aux compositions d'époxyde, d'une composition de complexe métallique des formules générales
MLₓBB_{y}, ou M (SR)ₓB_{z}
M étant un ion métallique d'un metal du 2ième et 3ième groupe principale ou d'une sous-groupe du système périodique des éléments
L un liant formant des chélats ou un acide carboxylique aliphatique ou aromatique
SR un ion d'une reste d'un acide anorganique
B un imidazole
x un nombre entier naturel dans la plage de 1 à 8,
y un nombre entier naturel dans la plage de 1 à 5,
z un nombre entier naturel dans la plage de 7 à 8.

2. Produit abrasif selon la revendication 1, caractérisé en ce qu'il s'agit de corps abrasifs.

3. Produit abrasif selon la revendication 1, caractérisé en ce qu'il s'agit de disques abrasifs renforcés par du tissu.

4. Produit abrasif selon la revendication 1, caractérisé en ce qu'il s'agit de disques abrasifs à compression élevée.

5. Produit abrasifs selon la revendication 1, caractérisés en ce qu'il s'agit de produits abrasifs sur un support.

6. Produit abrasif sur support selon la revendication 5, caractérisé en ce que la liaison de base et la liaison de finition comportent des liants ou des composants durcisseurs différents.

7. Produit abrasif sur support selon les revendications 5 et 6, caractérisé en ce que les produits abrasifs sont des disques abrasifs en éventail ou des roues abrasives à lamelles.

8. Disques abrasifs en éventail ou roues abrasives à lamelles, carctérisés en ce que les différentes lamelles sont collées au moyen d'un liant selon la revendication 1, sur le support en éventail ou à lamelles.
